# EUROPÄISCHE PATENTANMELDUNG

(11) **EP 1 983 246 A1**
(43) Veröffentlichungstag der Anmeldung: **22.10.2008**
(21) Anmeldenummer: 08405110.1
(22) Anmeldetag: 18.04.2008
(51) Int. Cl.: F16L 33/207

(54) **Schlauchpresshülse**

(30) Priorität: 20.04.2007 CH 6572007
(71) Anmelder: Bösch, Karl, 4202 Duggingen (CH)
(72) Erfinder: Bösch, Karl, 4202 Duggingen (CH)
(74) Vertreter: Braun, André jr.

(57) **Zusammenfassung**

Zum Fixieren und Abdichten von Spiralschläuchen an Anschlussorganen verwendet man metallische Presshülsen, die an der Aussenfläche der Spiralschläuche angesetzt und mit hohem Druck radial angepresst werden. Diese Fixiertechnik lässt sich aber nur auf Schläuche mit ebener, d.h. nicht gewellter Aussenfläche anwenden. Die mit peripher herausragenden Spiraldrähten versehenen Schläuche können auf diese Weise nicht gleichmässig angepresst und abgedichtet werden.

Gemäss der vorliegenden Erfindung lassen sich nun auch Spiralschläuche mit aussenliegenden Spiraldrähten gleichmässig und dicht an die Anschlussorgane anpressen. Zu diesem Zweck wird die Presshülse (5) vor dem Verpressen an ihrer kreiszylindrischen Innenfläche mit einer Elastomerschicht (7) versehen, in welche eine der Form der peripher herausragenden und vom Schlauchmaterial umhüllten Drahtspirale (2) entsprechende Spiralnut (8) eingeformt ist. Unter hohem Pressdruck werden einerseits die Zwischenräume zwischen den Windungen des Spiraldrahtes (2) mit Elastomer satt ausgefüllt und andererseits wird der Druck in insbesondere radialer, nach dem Schlauchinnern weisender Richtung weitergegeben. Die Schlauchinnenwand wird dabei gleichmässig gegen den Umfang des Adapters (3) gepresst, sodass absolute Dichtheit gewährleistet ist.

## Beschreibung

Die Erfindung betrifft eine Schlauchpresshülse gemäss dem Oberbegriff des unabhängigen Patentanspruchs.

Derartige Schlauchpresshülsen dienen bekanntlich zum Anschluss von Spiralschlauch-Endabschnitten an eine feste Rohrleitung oder an das Anschlussteil einer Verarbeitungsanlage.

Spiralschläuche sind flexible, aus einem der jeweiligen Art des zu fördernden Gutes entsprechenden Kunststoff hergestellte Schläuche, die unter anderem in der Lebensmittel- und Pharmaindustrie zum Befördern von Feststoffen wie Stäuben, Pulvern, Fasern und Spänen oder auch Flüssigkeiten und Gasen eingesetzt werden. Zur Gewährleistung der erforderlichen Flexibilität, der Abknicksicherheit und der Erzielung kleiner Biegeradien bei hoher Vakuumfestigkeit wird in das Kunststoffmaterial dieser Schläuche ein Spiraldraht, d.h. eine aus Edelstahldraht erstellte Spirale eingegossen, die aus der Schlauchoberfläche als spiralförmiges Profil herausragt und vom Schlauchmaterial umschlossen ist.

Es ist bekannt, den Endabschnitt eines Spiralschlauches nach dem Einschieben eines Anschlussteils, beispielsweise eines Adapters, mit Schlauchbriden festzuklemmen. Diese lassen sich aber mit dauerhaftem Erfolg nur für Anschlussbefestigungen anwenden, bei welchen die absolute Dichtheit nicht erforderlich ist.

Gemäss einem weiteren, bekannten Verfahren werden zum Anschluss der Spiralschlauch-Endabschnitte mit glatten Innen- und Aussenwandungen die in die Schläuche eingeführten metallischen Adapter bzw. Pressnippel im Hinblick auf die erforderliche absolute Dichtheit unter hohem Druck mittels metallischer, am Schlauchumfang aufgesetzter Presshülsen angepresst. Zu diesem Zweck wird eine Schlauchpresshülse über ein Schlauchende geschoben, das Schlauchende mit der aufgesetzten Presshülse über den Schlauchpressnippel gestossen, die Schlauchpresshülse bündig bis an das Schlauchende geschoben und dann auf einer Schlauchpressmaschine mit speziellen Pressbacken radialförmig zusammengestaucht, so dass ihr Durchmesser verkleinert und der dazwischen liegende Schlauch mit grosser Kraft an den Schlauchpressnippel gepresst wird. Auf diese Art werden Schlauchenden mit Schlauchnippeln zu festen Einheiten verbunden.

Diese weit verbreitete und in vielen Industriebereichen angewendete Schlauchpresstechnik hat sich einerseits sehr bewährt, ist aber andererseits mit dem Nachteil verbunden, dass sie nur bei Schläuchen mit glatter Innen- und Aussenwandung anwendbar ist. Bei Spiralschläuchen mit erhabenen, d.h. aussenliegenden Drahtspiralen, die also ungleichförmige Wandstrukturen aufweisen, versagt die beschriebene Presstechnik, da sie bei Verwendung der herkömmlichen Schlauchpresshülsen die Dichtheit zwischen Schlauchnippel und Spiralschlauch nicht gewährleisten kann.

Es ist somit die Aufgabe der vorliegenden Erfindung, diese Nachteile zu beheben und eine Schlauchpresshülse vorzuschlagen, die für Spiralschläuche mit aussenliegenden Drahtspiralen verwendet werden kann und deren absolute Dichtheit bei der Förderung pulverförmiger, flüssiger oder gasförmiger Stoffe gewährleistet ist.

Die Lösung dieser Aufgabe ist im kennzeichnenden Teil des unabhängigen Patentanspruchs definiert. Bevorzugte Ausführungsformen des Erfindungsgegenstandes ergeben sich aus den abhängigen Ansprüchen.

Zum besseren Verständnis des Erfindungsgedankens wird nachstehend eine Ausführungsform der erfindungsgemässen Schlauchpresshülse unter Bezugnahme auf die beiliegende Zeichnung beschrieben. Es zeigen:
Fig. 1 eine Schnittdarstellung eines Spiralschlauch-Endabschnittes vor dem Verpressen auf einen Adapter unter Verwendung einer bevorzugten Ausführungs- form der erfindungsgemässen Presshülse und
Fig. 2 den gleichen Spiralschlauch-Endabschnitt nach erfolgter Einwirkung der Presskraft.

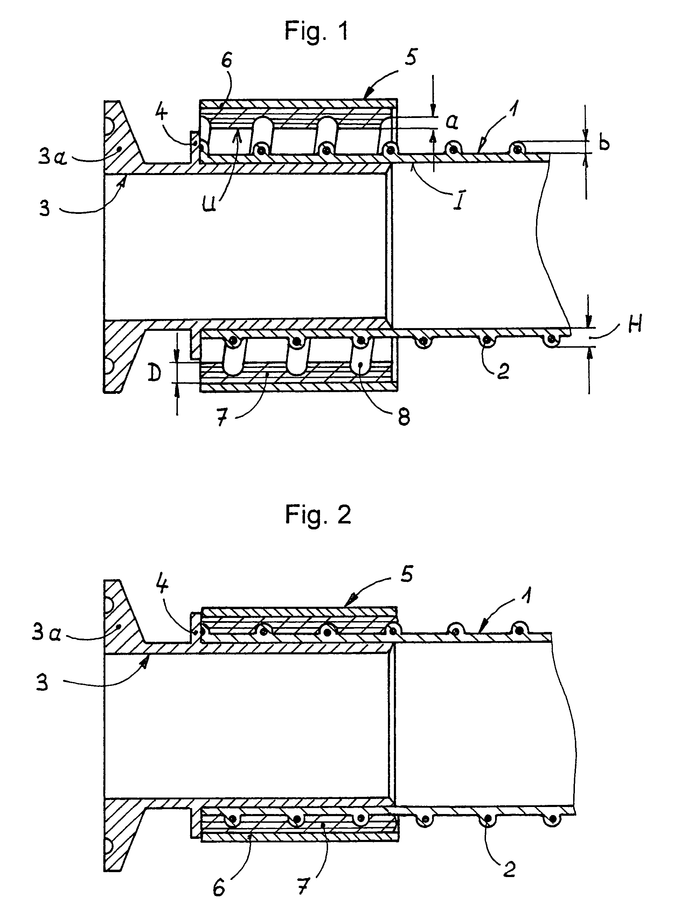

Der in Fig.1 mit 1 bezeichnete Spiralschlauch weist an seiner Aussenfläche eine Stahlspirale 2 auf, die somit die Schlauchaussenfläche schraubenlinienförmig umgibt und ferner vom Kunststoffmaterial des Schlauches umschlossen ist.

Der Ausdruck "spiralförmig", der sich in der Spiralschlauchtechnik durchgesetzt hat, wird demnach auch im vorliegenden Zusammenhang so verstanden, dass die so gebildete "Spirale" am Umfang des Schlauches einer räumlichen Schraubenlinie folgt. Dieser Wortgebrauch ist dem Fachmann der Spiralschlauchtechnik geläufig und wird daher beibehalten.

Unter "Spiraldraht" ist im vorliegenden Zusammenhang stets der vom Material des Spiralschlauchs umschlossene, in Axialrichtung des Spiralschlauches an dessen Umfang sich erstreckende Spiraldraht zu verstehen.

Vom freien Ende des Spiralschlauchs 1 her ragt in denselben ein Rohrendstück oder ein Adapter 3, der beispielsweise als Tri-Clamp-Adapter ausgebildet sein kann und der mit seinem Anschlagbund 4 am Schlauch 1 anliegt. Dieser Adapter ist einerseits mit einem Anschlussflansch 3a und andererseits, im Hinblick auf das den Schlauch durchströmende Medium, mit einer Abschrägung 3b versehen.

Oberhalb des am Adapterbund 4 anliegenden Spiralschlauch-Endabschnittes ist auf den letzteren eine zylinderförmige Presshülse 5 aufgeschoben. Diese Schlauchpresshülse 5 ist so dimensioniert, dass sie sich mit Spiel über die Windungen des Spiraldrahtes 2 hinwegschieben lässt. Sie weist einen metallischen, vorzugsweise aus Edelstahl erstellten Rohrabschnitt 6 auf, der an seiner Innenseite eine Schicht 7 aus Elastomer trägt. Das Elastomer dieser Schicht 7 sollte mindestens den Härtegrad des Spiralschlauchs 1 aufweisen und besteht bei einer bevorzugten Ausführungsform aus Polyurethan. Die Dicke D der Elastomerschicht 7 ist vorzugsweise so zu wählen, dass dieselbe nach erfolgtem Pressvorgang den Spiraldraht 2 umschliesst.

Die Elastomerschicht 7 kann gemäss der bevorzugten Ausführungsform direkt auf die Innenseite des Rohrsegments 6 aufgebracht oder aber, gemäss einer Variante, vor dem Pressvorgang als separater Elastomerring in das Rohrabschnitt 6 eingelegt bzw. eingeklebt sein.

Wie ferner Fig. 1 zeigt, ist in die Innenfläche des Elastomers 7 eine in Axialrichtung des Spiralschlauches verlaufende Spiralnut 8 eingearbeitet, die einen dem Schlauchprofil im Bereich des Spiraldrahtes 2 entsprechenden, beispielsweise halbkreisförmigen oder polygonalen Querschnitt aufweisen kann und den Windungen des Spiraldrahtes 2 entsprechend so ausgeführt ist, dass die beiden Spiralen - vom Spiraldraht 2 einerseits und der Spiralnut 8 andererseits - mindestens annähernd, im Idealfall möglichst genau, aufeinanderpassen. Hierdurch wird gewährleistet, dass die Spiralnuten zu Beginn des Anpressvorganges eine wichtige Führungsfunktion ausüben, indem sie bei der gegenseitigen Annäherung von Elastomerschicht 7 und Spiralschlauch 1 das exakte axiale Ineinandergreifen von Spiralnut 8 und Spiraldraht 2 sicherstellen.

Die in Fig. 1 mit a bezeichnete Tiefe der Nut 8 ist vorzugsweise so zu bemessen, dass sie in etwa der die Aussenfläche des Spiralschlauches 1 überragenden Höhe b des umhüllten Spiraldrahtes 2 entspricht. In Bezug auf den noch zu beschreibenden Pressvorgang wäre dies der Idealfall, doch wäre zweifellos auch eine dichte Pressverbindung mit einer etwas grösseren Nuttiefe erzielbar.

Die Gesamtdicke D der Elastomerschicht 7 sollte in jedem Falle so gewählt werden, dass auch nach erfolgtem Pressvorgang zwischen dem Nutgrund und der angrenzenden Innenfläche des Rohrabschnitts 6 eine Mindestdicke von Elastomer verbleibt. Bei einer bevorzugten Ausführungsform entspricht die Dicke D der Elastomerschicht mindestens annähernd, im Idealfall exakt, der Gesamthöhe H von Spiralschlauch 1 und Spiraldraht 2.

Der gleiche Spiralschlauch-Endabschnitt ist in Fig. 2 nach erfolgtem Pressvorgang dargestellt. Bei diesem Pressvorgang greift eine bekannte - mit beispielsweise acht Pressbacken ausgerüstete - Schlauchpresse an der Aussenfläche des Rohrabschnitts 6 mit hoher Presskraft an und verformt das Rohrabschnitt dabei so weit, bis dieses den Spiralschlauch 1 mit der Elastomerschicht 7 gleichmässig umschliesst. Dieser exakt steuerbare radiale Vorschub der Pressbacken ist dem Fachmann bekannt und wird daher auch nicht mehr im Detail beschrieben. Für die vorliegende Erfindung ist dagegen von Bedeutung, wie sich das Elastomer im Laufe des Pressvorgangs verhält. Sobald sich nämlich die Nut 8 der Elastomerschicht 7 auf den umhüllten Spiraldraht 2 abgesenkt hat und auf diesem aufsitzt, hat auch die Unterkante U der Elastomerschicht die Umfangsfläche des Spiralschlauchs 1 erreicht und wird bei weiterer Druckanwendung die Zwischenräume zwischen den Drahtwindungen des Spiralschlauches 1 einerseits satt ausfüllen, anderseits aber den ausgeübten Druck in praktisch radialer, nach dem Schlauchinnern weisender Richtung weitergeben, so dass die Schlauchinnenwand I unter grossem Druck - und insbesondere gleichmässig - gegen den Umfang des Adapters 3 angepresst wird. Dadurch wird der Spiralschlauch-Endabschnitt auf dem Gesamtumfang seiner Innenfläche an den Adapter 3 angepresst und der Adapter 3 infolgedessen vollständig und dauerhaft abgedichtet. Der mit aussenliegenden Stahldrähten 2 versehene Spiralschlauch 1 wird damit ein hochwertiges, vielseitig einsetzbares GMP- und FDAkonformes Transportorgan für die Pharma-, Chemie- und Lebensmittelindustrie.

Dank der beschriebenen Verwendung der Elastomerschicht 7 wird eine absolute Dichtheit gegenüber granulat- bzw. pulverförmigen, flüssigen und gasförmigen Medien erreicht, was bei den mit aussenliegenden Spiraldrähten versehenen Spiralschläuchen bisher nicht erzielt werden konnte.

## Patentansprüche

1. Schlauchpresshülse zum Abdichten und Befestigen eines Spiralschlauch-Endabschnittes (1) an einem in denselben hineinragenden Anschlussteil, beispielsweise einem Tri-Clamp-Adapter (3) zum Anschluss an eine Rohrleitung oder ein Anschlussteil einer Verarbeitungsanlage, wobei der zu verbindende Spiralschlauch (1) mit einem aussenliegenden, d.h. am Schlauchumfang peripher aus demselben herausragenden und vom Schlauchmaterial umhüllten Spiraldraht (2) versehen ist, **dadurch gekennzeichnet, dass** die in Form eines Rohrabschnitts (6) ausgebildete Schlauchpresshülse (5) an ihrer Innenseite eine Elastomerschicht (7) aufweist, deren dem Spiralschlauch (1) zugewandte Innenfläche mit einer in der Elastomerschicht (7) eingeformten Spiralnut (8) versehen ist, die so dimensioniert ist, dass sie vor dem Verpressen, beim Zusammenfügen von Schlauchpresshülse (5) und Spiralschlauch (1), mindestens annähernd auf dem Spiraldraht (2) des Spiralschlauches (1) aufliegt.

2. Schlauchpresshülse nach Anspruch 1, **dadurch gekennzeichnet, dass** die Dicke (D) der Elastomerschicht (7) mindestens annähernd der Gesamthöhe (H) von Spiralschlauch (1) und Spiraldraht (2) entspricht.

3. Schlauchpresshülse nach Anspruch 1 oder 2, **dadurch gekennzeichnet, dass** die Tiefe (a) der genannten, in die Elastomerschicht (7) eingeformten Spiralnut (8) mindestens annähernd der die Aussenfläche des Spiralschlauchs (1) überragenden Höhe (b) des umhüllten Spiraldrahtes (2) entspricht.

4. Schlauchpresshülse nach einem der Ansprüche 1 bis 3, **dadurch gekennzeichnet, dass** die Elastomerschicht (7) mindestens die gleiche Härte wie das Grundmaterial des zu verbindenden Spiralschlauchs (1) aufweist.

5. Schlauchpresshülse nach Anspruch 4, **dadurch gekennzeichnet, dass** die verwendete Elastomerschicht (7) aus Polyurethan besteht.

6. Schlauchpresshülse nach einem der Ansprüche 1 bis5, **dadurch gekennzeichnet, dass** die in die Elastomerschicht (7) eingeformte Spiralnut (8) einen dem Schlauchprofil entsprechenden Querschnitt aufweist.

7. Schlauchpresshülse nach einem der Ansprüche 1 bis 6, **dadurch gekennzeichnet, dass** die Elastomerschicht (7) in die Innenseite des Rohrabschnitts (6) eingeklebt ist.
